# EUROPEAN PATENT APPLICATION

(11) **EP 4 272 696 A1**
(43) Date of publication of application: **08.11.2023**
(21) Application number: 21915739.3
(22) Date of filing: 28.12.2021
(51) Int. Cl.: A61C 19/00, A61C 17/02, A61C 17/06

(54) **DENTAL SURGERY ASSISTANCE DEVICE**

(30) Priority: 31.12.2020 KR 20200188676
(71) Applicant: Neodex Corp., Seoul 06258 (KR)
(72) Inventor: YOON, Soung Jun, Seoul 05501 (KR)
(74) Representative: Studio Torta S.p.A.
(86) International application number: PCT/KR2021/019991
(87) International publication number: WO 2022/145941

(57) **Abstract**

An assistant tool for dental treatment is provided, including an inner frame inserted into an oral cavity, and a retraction member coupled to the inner frame to retract tissues around the oral cavity, in which the assistant tool includes a holder provided on at least one of the inner frame and the retraction member to fix a suction, and configured such that one side of the suction is positioned at a normal position on a predetermined portion in the oral cavity.

## Description

### BACKGROUND

### Technical Field

The present invention relates to an assistant tool for dental treatment.

### Background Art

In general, in the course of performing a medical treatment by a treatment provider, personnel are needed to assist with the treatment. For example, in the course of performing a dental treatment, while a dentist as a treatment provider holding a reflector in one hand and a handpiece in the other hand performs the treatment, an assistant holding a suction and the like assists the treatment by positioning a suction nozzle at an appropriate time and place.

These assisting tasks may be perceived as relatively simple and repetitive tasks, and as the avoidance of simple and repetitive tasks builds up, the need for technology that can replace manpower is being raised.

On the other hand, a device for retracting soft tissues such as lips is used to secure a field of view for the dental treatment provider, but there is a problem in that this causes discomfort to a patient.

<Prior Patent Art> KR2009-0128048A, US2007/0148619

### SUMMARY

### Technical Problem

One aspect of the present invention is to provide an assistant tool for dental treatment capable of assisting a treatment provider while reducing a patient's discomfort in the course of the dental treatment.

Another aspect of the present invention is to provide an assistant tool for dental treatment capable of assisting in maintaining the proper positioning of treatment tools such as suction tips while allowing the patient to perform the process of opening and closing their mouth.

### Technical Solution

The assistant tools for dental treatment is provided, including an inner frame inserted into an oral cavity, and a retraction member coupled to the inner frame to retract tissues around the oral cavity is provided, in which the assistant tool may include a holder provided on at least one of the inner frame and the retraction member to fix a suction, and one side of the suction may be positioned at a normal position on a predetermined portion in the oral cavity.

The holder may be provided on the inner frame or the retraction member so as to be moved or attached and detached.

The suction may include a suction tip and a suction tube, and the suction tube may have an flexural modulus in a range of 0.3 to 2.8 Gpa.

The inner frame and the retraction member may be formed in a shape in which top and bottom are symmetrical and left and right are symmetrical.

The holder may fix the suction so that the end of the suction is positioned in a space between the vestibular and the buccal mucosa of the oral cavity.

An assistant tool for dental treatment is provided, including an inner frame inserted into an oral cavity, and a retraction member coupled to the inner frame to retract surrounding tissues, in which the assistant tool may include a holder provided on at least one of the inner frame and the retraction member to fix a suction, and configured such that one side of the suction is positioned in a predetermined portion inside the oral cavity while maintaining the oral cavity of a patient in an open state, in which the inner frame may include a first section in contact with a periphery of the frenum in the oral cavity, a second section in contact with a periphery of buccal mucosa, and a third section that is between the first section and the second section and in contact with a periphery of the vestibular of the oral cavity, and an indentation formed in a shape dented toward a central portion of the oral cavity may be provided in the first section and may be such that the frenum approaches to the indentation when the inner frame is inserted into the oral cavity.

There may be a predetermined height difference between a highest point of the first section and a lowest point of the second section.

The second section may be extended long in a lateral direction, and the third section may have a curved shape in which an absolute value of a slope is reduced from the first section to the second section.

An assistant tool for dental treatment is provided, including an inner frame inserted into an oral cavity, and a retraction member coupled to the inner frame to retract tissues around the oral cavity, in which the assistant tool may include a holder provided on at least one of the inner frame and the retraction member to fix a suction, and configured such that one side of the suction is positioned at a normal position on a predetermined portion in the oral cavity, the retraction member may include an outer frame configured so as to be mounted on an outside of the oral cavity, and a cover member in the form of a film having elasticity, with one side coupled to the inner frame and the other side coupled to the outer frame, in which the assistant tool for dental treatment may be configured such that, even when it is mounted, the assistant tool may allow the oral cavity of a patient to be open, and also allow an opening process of widening a gap between upper and lower teeth and a closing process of narrowing the gap between the upper and lower teeth to be performed.

The holder may be provided on the inner frame or the retraction member so as to be moved, allowing the suction to be positioned at a first position according to an anatomical shape in the oral cavity and a situation of the procedure, in which the first position may indicate a position at which a suction operation can be performed by the suction without disturbing the procedure.

The suction may include a suction tip and a suction tube, and a force required to separate the suction tube from the holder may be greater than a force required to fix the suction tube to the holder.

The holder may be provided in the inner frame, an outer holder may be provided in the outer frame, and the suction tube may be fixed to the holder and the outer holder.

The inner frame may include a first section in contact with a periphery of frenum in the oral cavity, a second section in contact with a periphery of buccal mucosa, and a third section that is between the first section and the second section and is in contact with a periphery of the vestibular of the oral cavity, and between a highest point of the first section and a lowest point of the second section, there may be a predetermined height difference such that a surface including a closed curve or an open curve forming the inner frame may be formed as a curved surface.

The second section may be extended long in a lateral direction, and inner frame may be configured in a peanut shape in which portions in contact with peripheries of frena in the oral cavity are dented into a concave shape.

### Advantageous Effects

The following useful effects are provided: it is possible to enable the treatment provider to perform procedure alone without the help of an assistant, and also improve the convenience of the treatment provider and reduce the discomfort of the patient.

In addition, during various types of procedures, since the treatment tool can be fixed at an optimal position that does not interfere with the operation of the treatment provider, it is possible to minimize interference with the movement of handpieces, instruments, or the like operated by the treatment provider.

Further, by making the inner frame have an ergonomic shape corresponding to the internal structure of the oral cavity, such as frenum, the inner frame can be seated in the oral cavity while relieving the patient's discomfort.

### BRIEF DESCRIPTION OF THE DRAWINGS

Embodiments of the present disclosure will be described with reference to the accompanying drawings described below, where similar reference numerals indicate similar elements but not limited thereto, in which:
FIG. 1 is a perspective view schematically showing an assistant tool for dental treatment;
FIG. 2 is a view provided to explain an outer frame of the assistant tool for dental treatment;
FIG. 3 is a view provided to explain an inner frame of the assistant tool for dental treatment;
FIG. 4 is a view provided to explain an example of use of an assistant tool for dental treatment;
FIG. 5 is a view provided to explain an outer frame of an assistant tool for dental treatment;
FIG. 6 is a view provided to explain an inner frame of an assistant tool for dental treatment;
FIGS. 7 to 11 are views provided to explain modifications of a holder applied to an assistant tool for dental treatment;
FIGS. 12 and 13 are views provided to explain an inner frame of an assistant tool for dental treatment;
FIG. 14 is a view provided to explain an assistant tool for dental treatment;
FIG. 15 is a view provided to explain an assistant tool for dental treatment;
FIGS. 16 and 17 are views provided to explain an assistant tool for dental treatment;
FIGS. 18A to 18C are views provided to explain a state of use of an assistant tool for dental treatment;

### DETAILED DESCRIPTION OF THE INVENTION

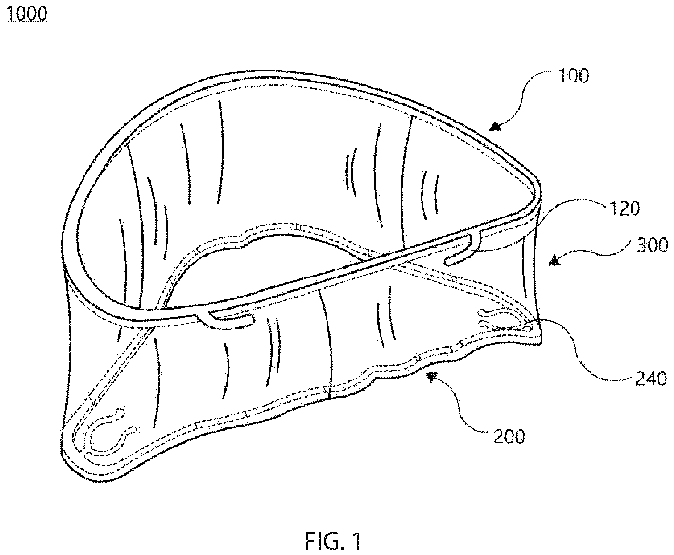

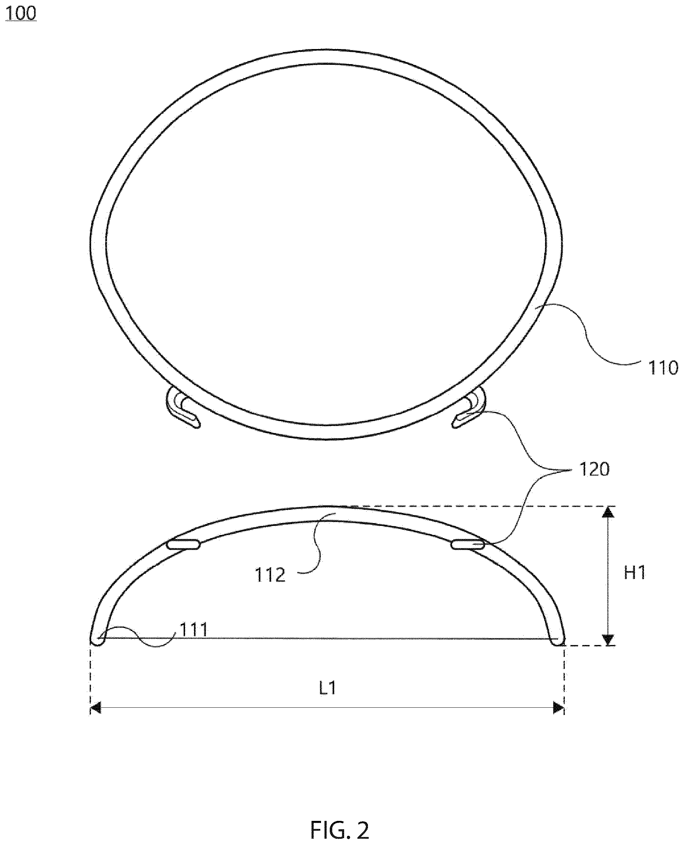

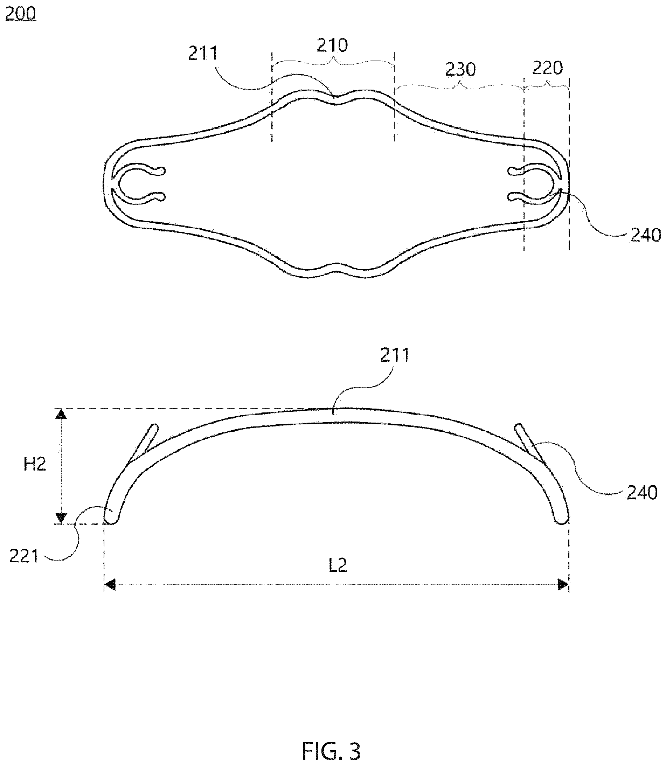

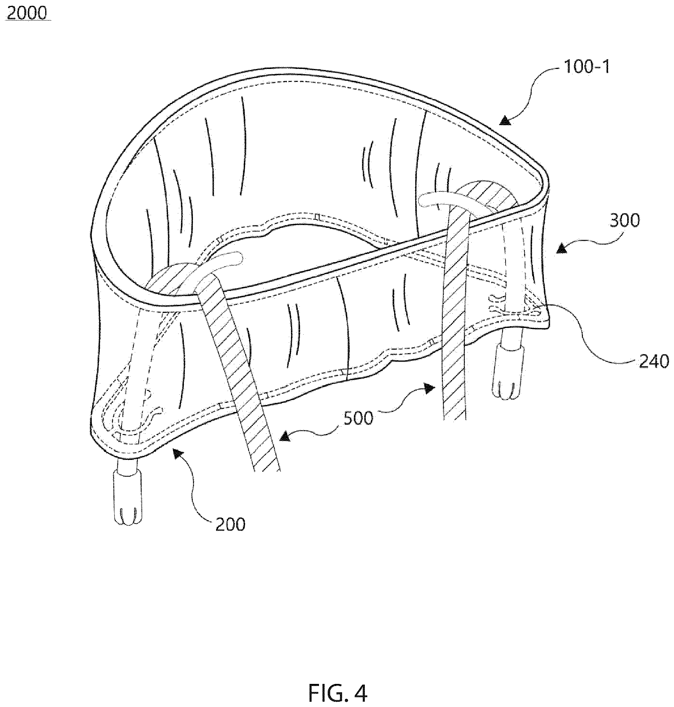

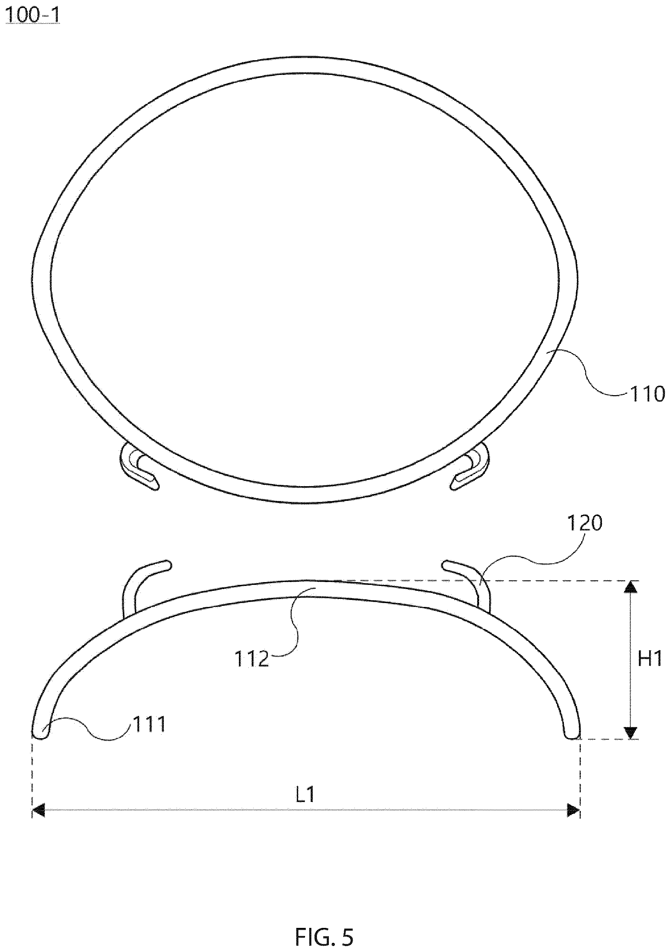

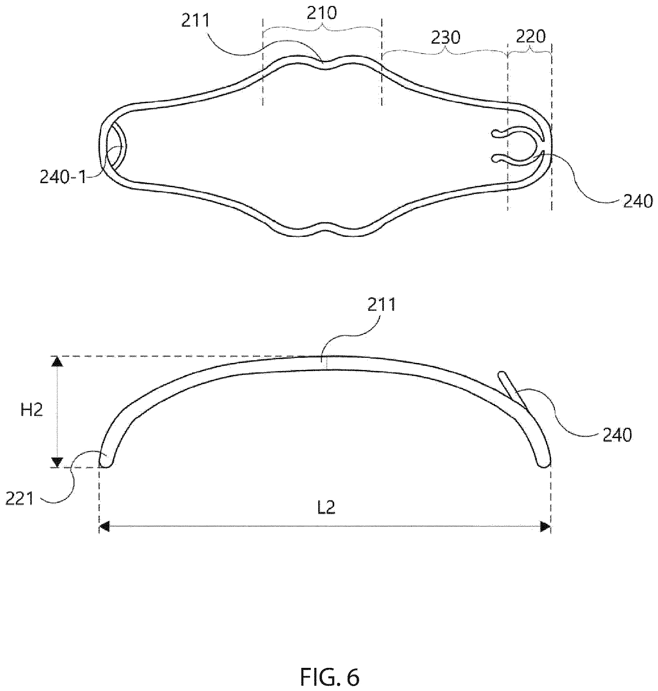

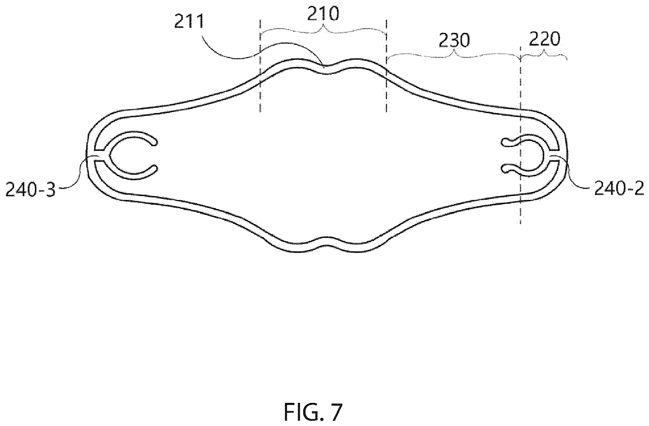

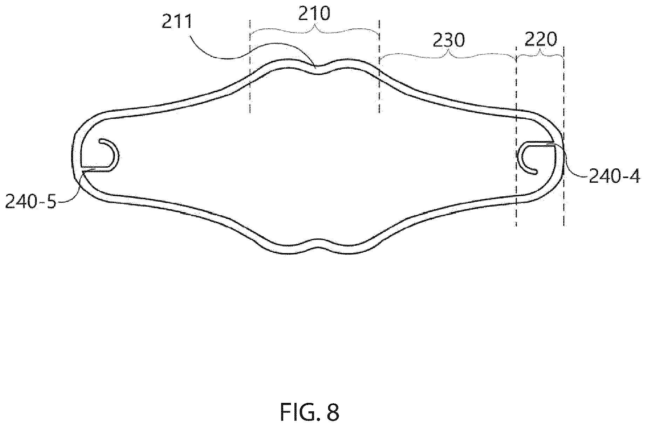

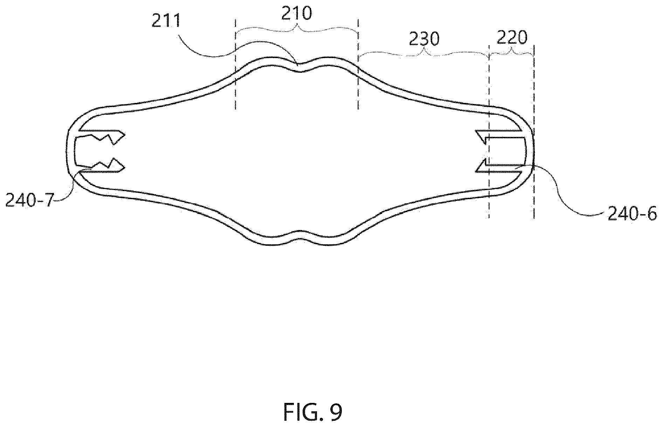

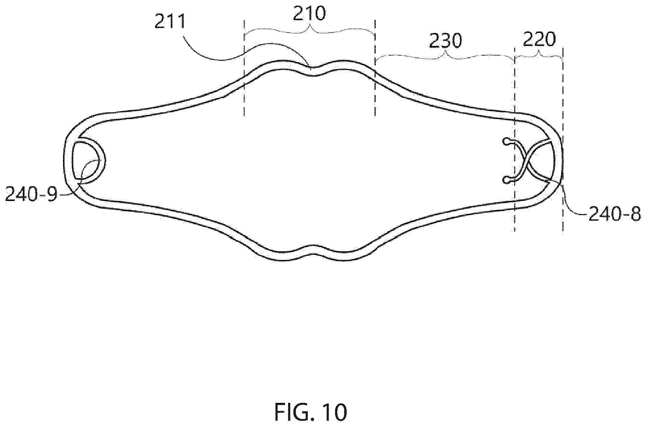

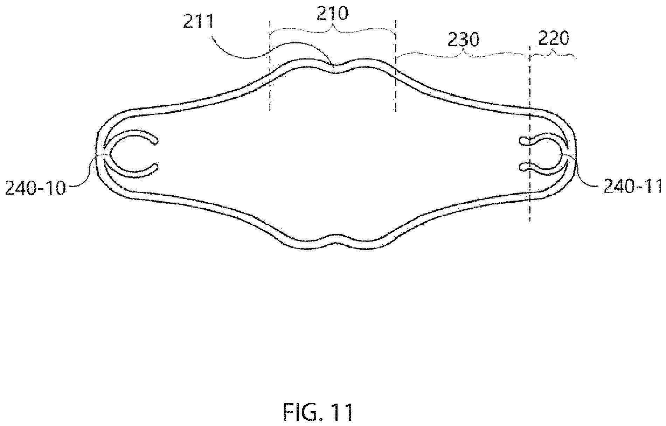

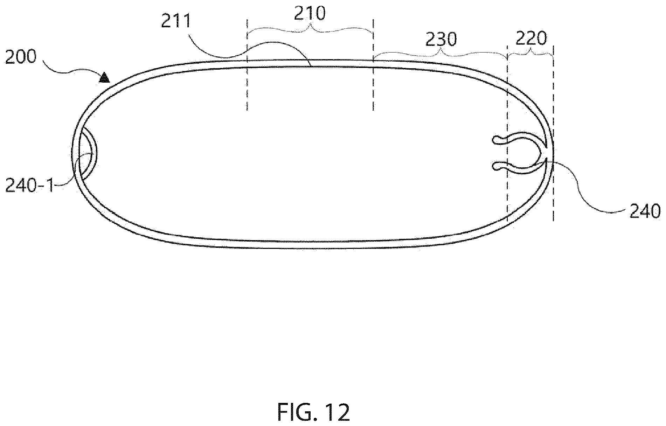

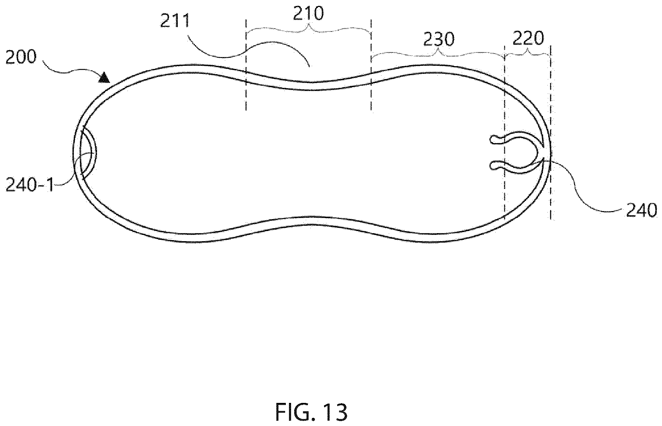

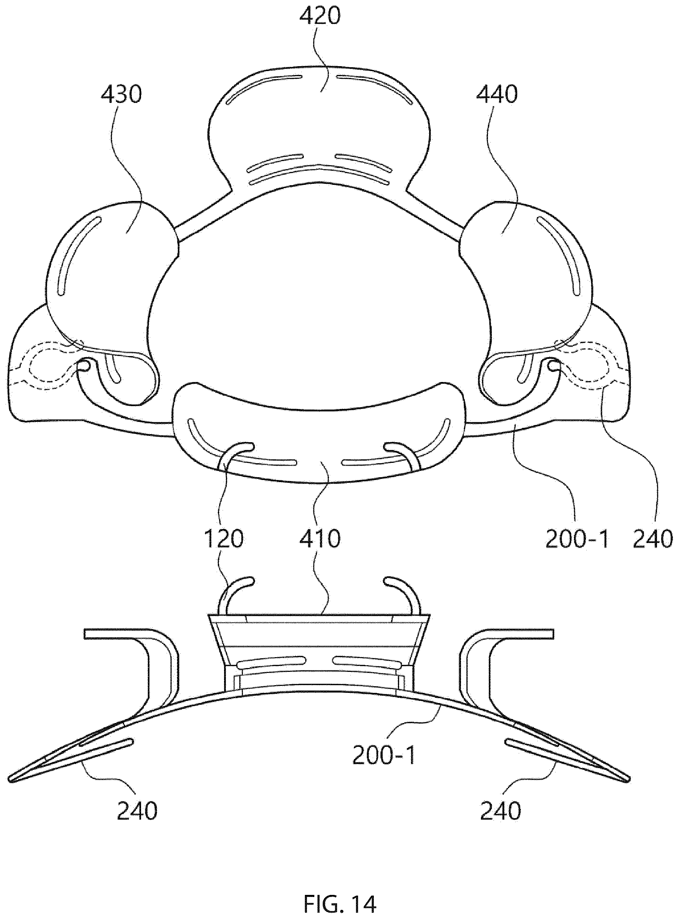

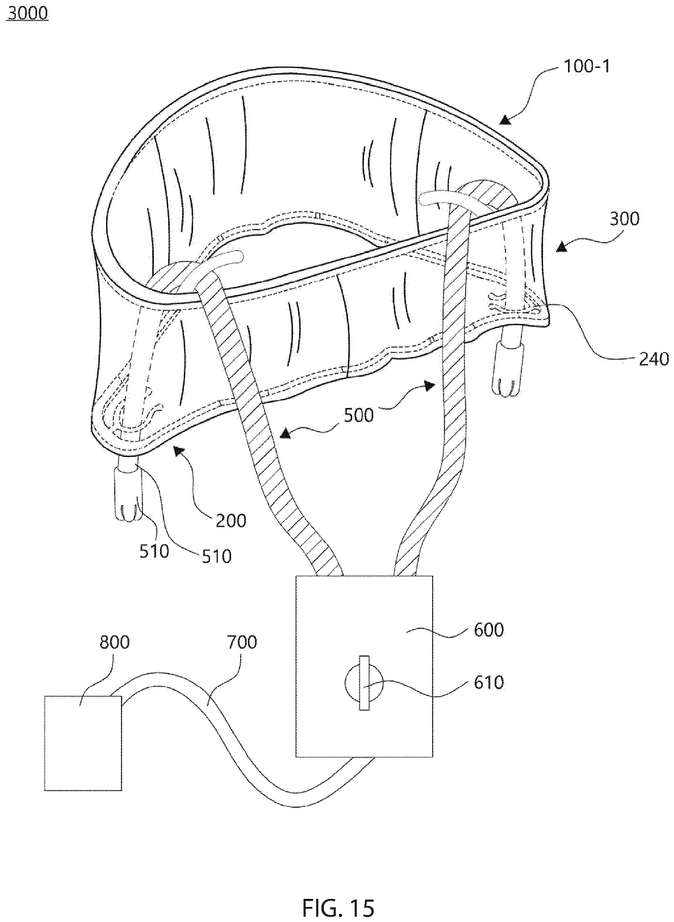

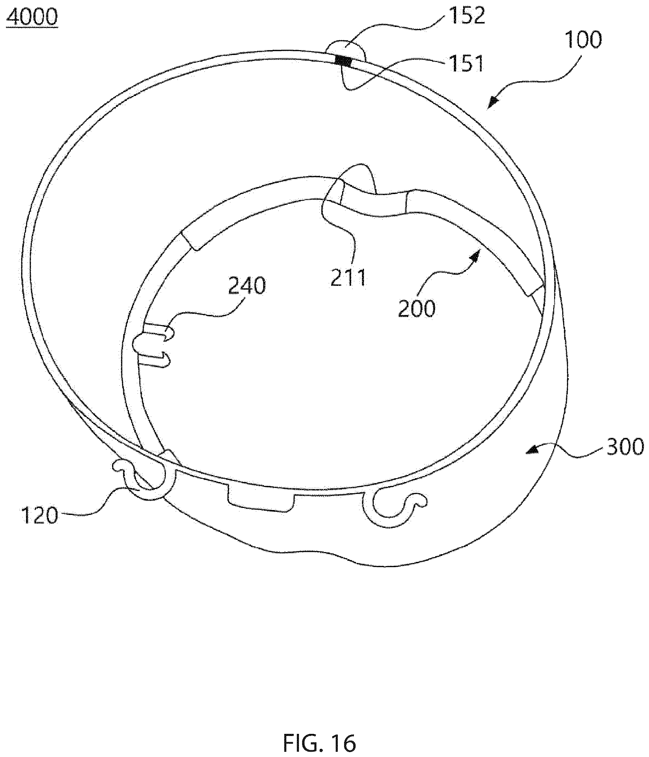

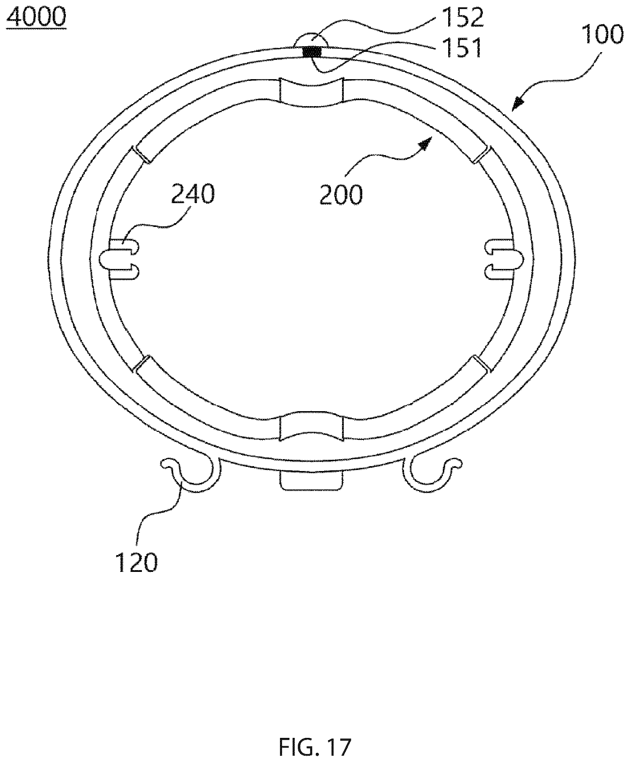

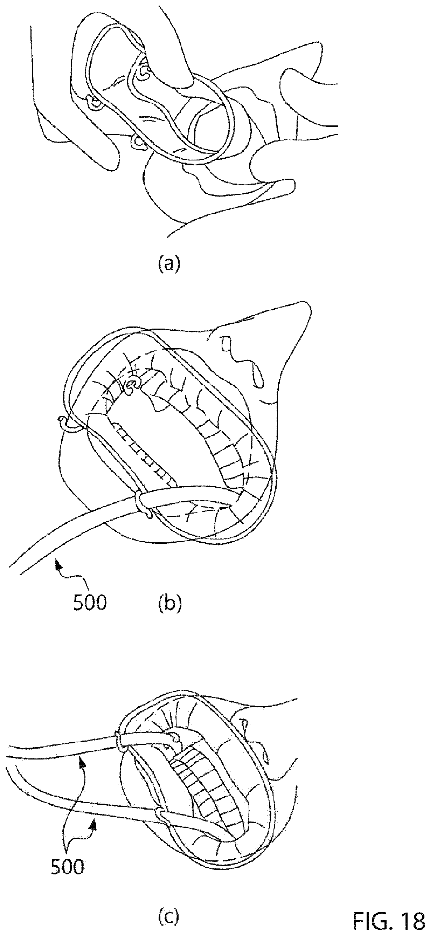

FIG. 1 is a perspective view schematically showing an assistant tool 1000 for dental treatment, FIG. 2 is a view provided to explain an outer frame 100 of the assistant tool 1000 for dental treatment, FIG. 3 is a view provided to explain an inner frame 200 of the assistant tool 1000 for dental treatment, FIG. 4 is a view provided to explain an example of use of an assistant tool 2000 for dental treatment, FIG. 5 is a view provided to explain the outer frame 100 of the assistant tool 2000 for dental treatment, FIG. 6 is a view provided to explain the inner frame 200 of the assistant tool 2000 for dental treatment, FIGS. 7 to 11 are views provided to explain modifications of a holder 240 applied to the assistant tool 1000 for dental treatment, FIGS. 12 and 13 are views provided to explain the inner frame 200 of the assistant tool 2000 for dental treatment, FIG. 14 is a view provided to explain the assistant tool 1000 for dental treatment, FIG. 15 is a view provided to explain an assistant tool 3000 for dental treatment, FIGS. 16 and 17 are views provided to explain an assistant tool 4000 for dental treatment, and FIGS. 18A to 18C are views provided to explain a state of use of the assistant tool 1000 for dental treatment.

The assistant tool 1000 for dental treatment may include the outer frame 100, the inner frame 200, a cover member 300, and the holder 240. As shown in FIG. 14, an assistant tool for dental treatment may be implemented by coupling first to fourth retraction members 410, 420, 430, and 440 to an inner frame 200-1, and providing the holder 240. At this time, the inner frame 200-1 is positioned in the oral cavity, and the first to fourth retraction members 410, 420, 430, and 440 are connected to the inner frame 200-1 to perform a function of retracting soft tissues such as lips.

On the other hand, the cover member 300 and the outer frame 100 may be referred to as the retraction members in that they perform the function of retracting soft tissues such as lips. That is, the cover member 300 and the outer frame 100 are coupled to the inner frame 200 as the retraction members and thus may retract lips and the like. In addition, the assistant tool 1000 for dental treatment may withstand the muscular strength of the soft tissue around the oral cavity and closely adhere to the inside of the oral cavity. Accordingly, the assistant tool 1000 for dental treatment may closely adhere to the anatomical structures in the oral cavity and may be used in various treatment procedures such as fixing, prosthetics, periodontal treatment, and surgical operation.

The inner frame 200 and the outer frame 100 may be formed in a closed curved shape or at least partially open straight or curved shape. The cover member 300 is connected between the inner frame 200 and the outer frame 100.

The inner frame 200 and the outer frame 100 may be made of various materials that can retract soft tissues. For example, the inner frame 200 and the outer frame 100 may be implemented with various metals or synthetic resin materials.

The cover member 300 may have elasticity and be formed in a film shape. The cover member 300 may be made of various synthetic resins or various metal materials.

One side of the cover member 300 is coupled to the inner frame 200 and the other side of the cover member 300 is coupled to the outer frame 100. Accordingly, a hollow pillar shape, in which a bottom edge is the inner frame 200, a top edge is the outer frame 100, and a side surface is the cover member 300, may be implemented. In addition, the inner frame 200 may be positioned inside the oral cavity of the patient, and the outer frame 100 may be positioned outside the patient's lips, which may retract soft tissues such as the patient's lips so as to secure the treatment provider's field of view of the affected area.

The holder 240 is provided in the assistant tool 100 for dental treatment. The holder 240 may be provided in the inner frame 200 or the outer frame 100. In addition, a treatment tool such as a suction tip 510 may be fixed to the holder 240. Accordingly, the assistant tool 1000 for dental treatment may provide the effect of allowing the retraction of the affected area and the fixing of the treatment tool.

The holder 240 may be configured to be movable or deformable. The holder 240 may be made of an elastic body. The holder 240 may allow the suction 500 to be positioned at a predetermined position according to the anatomical shape in the oral cavity and the situation of the procedure. At this time, the predetermined position may refer to a position at which the suction operation can be performed without the suction 500 interfering with the treatment. Accordingly, the suction 500 or the like may be disposed at an appropriate position for the patient's anatomical shape, thereby reducing the patient's discomfort. In addition, the suction 500 may be positioned at a first position during a predetermined treatment, and the suction 500 may be positioned at a second position during another treatment.

The holder 240 may be fixedly implemented. When the inner frame 200 is positioned at a normal position in the oral cavity, the position of the holder 240 may be adjusted accordingly. At this time, the treatment tool may be determined to be in the normal position when it is in a desired position in the oral cavity according to the type of treatment tool to be fixed to the holder 240 or the area to be treated, and it can be understood that the holder 240 is in a normal position when it is in such a position that it can support the treatment tool at the normal position determined as described above.

The normal position of the treatment tool may refer to a position of the treatment tool in a state where the tip of the treatment tool is in contact with any point in a space between the vestibular and the buccal mucosa of the oral cavity.

The holder 240 may be implemented to have a positional variation. In this case, the holder 240 may change positions by sliding along the inner frame 200, the outer frame 100, and the cover member 300. In addition, the holder 240 may be configured to be attachable to and detachable from the inner frame 200, the outer frame 100, and the cover member 300.

At least a portion of the holder 240 is preferably made of an elastic material. In addition, the holder 240 may be made in a tongs shape or in a ring shape forming a closed curve. At this time, the holder 240 may alone form a closed curve but may form the closed curve together with the inner frame 200 in another example (see 240-1 in FIG. 6). In addition, as shown in FIGS. 7 to 11, the holder 240 may have various shapes, and a coupling relationship with the inner frame 200 may be appropriately selected according to the respective shapes (see 240-2, 240-3, 240-4, 240-5, 240-6, 240-7, 240-8, 240-9, 240-10, and 240-11 in FIGS. 7 to 11). The holders 240, 240-1, 240-2, 240-3, 240-4, 240-5, 240-6, 240-7, 240-8, 240-9, 240-10, and 240-11 may be provided in the outer frame 100 (not shown) separately from the outer holder 120 and be utilized for fixing the treatment tool.

Referring to FIG. 3, the inner frame 200 may include a first section 210, a second section 220, and a third section 230. The first section 210 may refer to a portion of the inner frame 200 that is in contact with the periphery of the frenum in the oral cavity, and the second section 220 may refer to a portion of the inner frame 200 that is in contact with the buccal mucosa in the oral cavity. The third section 230 may correspond to a section between the first section 210 and the second section 220 and may refer to a portion that is in contact with the periphery of vestibular of the oral cavity.

An indentation 211 may be provided in the first section 210. The indentation 211 may have a shape in which at least a portion of the first section 210 is dented toward the center of the oral cavity. Accordingly, when the inner frame 200 is inserted into the oral cavity, the first section 210 may come into contact with the periphery of the frenum as the frenum approaches the indentation 211. The related retractor had the problem that the frenum area is excessively pressed causing the patient to feel uncomfortable or that the inner frame 200 fails to be stably fixed in the oral cavity causing the inner frame 200 to escape the oral cavity even with a small movement. The first section 210 may have a shape corresponding to the peripheral section of the frenum to allow alleviation of discomfort and stable positioning of the inner frame 200 inside the oral cavity.

There may be a predetermined height difference H1 between a center end portion 112 and a side end portion 111. That is, the surface forming the outer frame 100 including a closed curve or an open curve may be a curved surface.

There may be a predetermined height difference H2 between the highest point of the first section 210 and the lowest point of the second section 220. That is, the surface forming the inner frame 200 including a closed curve or an open curve may be a curved surface.

In this way, the inner frame 200 may be formed in a three-dimensional shape so that the inner frame 200 may be stably positioned in the oral cavity while the patient's discomfort may be alleviated.

The second section 220 may be extended long in the lateral direction, and the third section 230 may be configured in a curved shape in which the absolute value of the slope decreases as the second section 220 is approached from the first section 210. Accordingly, even for the procedure performed on the molar side, a sufficient field of view and space can be secured by pushing the patient's cheek as much as possible, and since the treatment tool such as the suction tip 510 fixed by the holder 240 is fixed at the optimal position (a portion where liquid such as water collects), the suction operation and the like can be efficiently performed without interfering with the movement of other treatment tools such as a handpiece and the like. In addition, the shape that is appropriate for the anatomical shape of the soft tissue inside the cheeks can alleviate the patient's discomfort, allow stable exertion of retraction force by the inner frame 200, and allow stable fixing of the treatment tools such as the suction tip 510 and the like.

The inner frame 200 and the outer frame 100 may be formed asymmetrically according to the anatomical shape of the oral cavity.

The inner frame 200 and the outer frame 100 may be symmetrically formed vertically and horizontally. In this case, even if the outer holder 120 is only positioned on either of the upper and lower sides of the outer frame 100, the assistant tool 1000 for dental treatment may be rotated 180 degrees and disposed upside down so that the outer holder 120 may be positioned where it is needed. In this way, the outer holder 120 is provided in the outer frame 100 so that the level of interference with the procedure performed by the treatment provider may be alleviated.

At least either of the inner frame 200 and the outer frame 100 may be symmetrically formed vertically and horizontally depending on a type of a patient such as a pediatric patient or a patient with disabilities, in which case an additional position of the holder 240 may be added.

The holder 240 may fix the treatment tool so that the treatment tool is positioned in a space between the vestibular and the buccal mucosa of the oral cavity. The holder 240 may determine the position of the treatment tool, and the holder 240 may fix the treatment tool so that the treatment tool is positioned in the space between the vestibular and the buccal mucosa of the oral cavity. Accordingly, the treatment tool does not interfere with the procedure performed by the treatment provider, while the patient's discomfort is minimized. At this time, the position of the holder 240 in the inner frame 200 or the position of the outer holder 120 in the outer frame 100 may be determined according to the structure of the holder 240 or the coupling relationship between the holder 240 and the treatment tool.

The situation in which the suction 500 as a treatment tool is coupled to the assistant tool 2000 for dental treatment and used for the procedure can be understood with reference to FIG. 4.

FIGS. 2 and 5 show an example in which the outer holder 120 is provided in the outer frame 100, and as shown in FIG. 2, the outer holder 120 may protrude from an outer frame body 110 in the horizontal direction, or as shown in FIG. 5, the outer holder 120 may protrude at a predetermined slope with respect to the horizontal direction.

Referring to FIGS. 12 and 13, the inner frame 200 may have an elliptical or peanut shape appropriate for the oral cavity, and thus manufacturing efficiency can be improved. For easy and stable fixing in the oral cavity, the inner frame 200 may be implemented as a closed curve having irregularities in a predetermined portion or as a closed curve having an open structure. If the inner frame 200 or the outer frame 100 is made in a plane shape or a shape close to a plane, manufacturing efficiency may be improved.

FIG. 15 is a view provided to explain the assistant tool 3000 for dental treatment.

Referring to FIG. 15, the assistant tool 3000 for dental treatment may perform the function of retracting soft tissues around the oral cavity, and also sucking up and removing fluids such as saliva or water collected in the oral cavity during the dental treatment from the oral cavity.

At this time, the suction 500 may include the suction tip 510 and a suction tube 520. The suction tip 510 may be coupled to one end of the suction tube 520, and a connector 600 may be coupled to the other end of the suction tube 520. In addition, a suction device 800 including a suction pump and the like may be connected to the connector 600 via a suction line 700. Accordingly, a suction force generated by the suction device 800 may be provided to the suction tube 520 through the suction line 700 and the connector 600. It is preferable that the force required to separate the suction tube 520 from the holder 240 is greater than the force required to fix the suction tube 520 to the holder 240. In addition, the suction tube 520 is preferably not separated from the holder 240 even if the suction tube 520 is subjected to the manipulation of the instruments or force of the soft tissues.

An adjusting device 610 may be provided in the connector 600. The adjusting device 610 may adjust whether to open or close between the suction tube 520 and the suction line 700. As shown in FIG. 15, a plurality of suction tubes 520 may be coupled to the connector 600, and the adjusting device 610 may adjust whether or not to provide the suction force to each or all of the suction tubes 520. The connector 600 may be placed on the chest or abdomen of a test subject, allowing the treatment provider to conveniently adjust whether or not to provide a suction force to the suction tube 520. Meanwhile, the suction device 800 and the suction line 700 may be implemented as a suction pump, a suction line, and the like, which are provided in most of the existing dental chairs, and accordingly, the assistant tool for dental treatment may be used by connecting the existing suction line to the connector 600, and as a result, there is no need to replace the existing dental chair and the like so that unnecessary costs in the course of introducing the assistant tool for dental treatment can be minimized.

The suction tube 520 may be implemented as a tube having an inner diameter of 3 to 6 mm, an outer diameter of 4 to 7 mm, and a thickness of 0.2 to 1.5 mm. The length of the suction tube 520 from a portion in contact with the holder 240 provided in the inner frame 200 to a section in contact with the holder provided in the outer frame 100 may be set to about 20 to 150 mm.

### <Test Example 1>

The suction tube 520 having an inner diameter of 3 mm, an outer diameter of 4 mm, and a thickness of 0.5 mm is inserted into the holder shown in FIG. 3 to prepare samples.

The suction tubes 520 having different flexural modulus are prepared for the respective samples.

After the prepared sample is placed in the oral cavity of an adult male, the number of repeated opening-closing operations is counted while repeating the opening-closing until the suction tube 520 is dislodged from the holder, and the discomfort of the test subject is measured on a scale of 1 to 10.

The number of clogging in the suction tube 520 during five-minute scaling while the suction force of 180 mbar is provided is checked.

**[Table 1] Test results according to Test Example 1**

| Sample type | Elastic modulus (Mpa) | Number of repetitions of opening and closing until dislodge of holder | Discomfort | Number of occurrences of clogging |
|---|---|---|---|---|
| Sample 1 | 0.2 | - | 1 | 10 |
| Sample 2 | 0.3 | - | 1 | 2 |
| Sample 3 | 1.0 | - | 1 | 0 |
| Sample 4 | 2.0 | 100 | 2 | 0 |
| Sample 5 | 2.8 | 20 | 5 | 0 |
| Sample 6 | 2.9 | 2 | 9 | 0 |
| Sample 7 | 3.0 | 1 | 10 | 0 |

According to the test results, it can be seen that if the flexural modulus is less than 0.3 Gpa, the shape recovery of the suction tube 520 is poor as the retention ability of the suction tube 520 rapidly decreases, and as a result, the flow of fluid inside the suction tube 520 is disrupted and clogging is rapidly increased.

In addition, according to the test results, it can be seen that if the flexural modulus exceeds 2.80 Gpa, there is a problem in that the suction tube 520 fixed by the holder in the oral cavity is not stably fixed to the holder, is dislodged from the holder, and discomfort of the test subject soars in the opening-closing process.

Considering the above test results, the suction tube 520 preferably has an flexural modulus in the range of 0.3 to 2.8 Gpa. Accordingly, during the process in which the test subject wearing the assistant tool 3000 for dental treatment repeats opening and closing actions, the discomfort of the test subject can be minimized, the risk of excessive changes in the position of the suction tip 510 can be reduced, the dislodging of the suction tube 520 can be minimized, and the retention ability, operability, comfort, and adhesion of the suction tube 520 can be appropriately secured.

The suction tube 520 may be implemented as a pipe made of a material such as silicone, polyurethane, and polyvinyl chloride (PVC). In addition, the suction tube 520 may be implemented by inserting a metal wire serving as a reinforcing material into the tube to increase operability, if necessary.

As shown in FIGS. 16 and 17, the outer frame 100, the inner frame 200, and the cover member 300 may be integrally formed in the assistant tool 4000 for dental treatment. At this time, the outer frame 100 may be made of a first material with a first thickness, the outer frame 100 may be made of a second material with a second thickness, and the cover member 300 may be made of a third material with a third thickness. In addition, the assistant tool 4000 for dental treatment may be made by a double injection method of molding the cover member 300 while the outer frame 100 and the inner frame 200, which are made in advance, are placed in a mold. A marker may be provided in the outer frame 100. A situation may arise where it is necessary to check the center portion of the assistant tool 4000 for dental treatment in the process of inserting the assistant tool 4000 for dental treatment into the oral cavity or in the process of performing the procedure, and the marker may be used in this case. The marker may be implemented as a colored mark portion 151 which is a portion of the outer frame 100 distinguished in a distinct color. The marker may be implemented as a protrusion 152 formed to protrude from the outer frame 100.

Referring to FIGS. 18A to 18C, the inner frame 200 of the assistant tool 4000 for dental treatment may be placed in the oral cavity of a patient and the outer frame 100 may be positioned outside the lips. The suction 500 may be positioned as needed, and the suction 500 may be fixed using the holder 240. In this state, an opening process of spreading the upper and lower teeth apart, or a closing process of bringing the upper and lower teeth into contact may be performed by the patient, as shown in FIGS. 18B and 18C.

Certain representative examples of the present invention have been described in detail above, but those skilled in the art to which the present invention pertains will understand that various modifications may be made to the above-described examples without departing from the scope of the present invention. Therefore, the scope of the present invention is not to be limited to the examples described above and is to be defined by not only the claims to be described below but also the equivalents to the claims.

Since the assistant tool for dental treatment refers to consumables used in dental treatments, the assistant tool for dental treatment may be used in the field of dentistry, and in particular, may be put to industrial use to solve problems caused by the shortage of treatment assistants.

## Claims

1. An assistant tool for dental treatment comprising an inner frame inserted into an oral cavity, and a retraction member coupled to the inner frame to retract tissues around the oral cavity, wherein the assistant tool comprises:
a holder provided on at least one of the inner frame and the retraction member to fix a suction, wherein one side of the suction is positioned at a normal position on a predetermined portion in the oral cavity.

2. The assistant tool for dental treatment according to claim 1, wherein the holder may be provided on the inner frame or the retraction member so as to be moved or attached and detached.

3. The assistant tool for dental treatment according to claim 1, wherein the suction may include a suction tip and a suction tube, and the suction tube may have an flexural modulus in a range of 0.3 to 2.8 Gpa.

4. The assistant tool for dental treatment according to claim 1, wherein the inner frame and the retraction member may be formed in a shape in which top and bottom are symmetrical and left and right are symmetrical.

5. The assistant tool for dental treatment according to claim 1, wherein the holder may fix the suction so that the end of the suction is positioned in a space between the vestibular and the buccal mucosa of the oral cavity.

6. An assistant tool for dental treatment is provided, including an inner frame inserted into an oral cavity, and a retraction member coupled to the inner frame to retract surrounding tissues, in which the assistant tool may include a holder provided on at least one of the inner frame and the retraction member to fix a suction, and configured such that one side of the suction is positioned in a predetermined portion inside the oral cavity while maintaining the oral cavity of a patient in an open state, in which the inner frame may include a first section in contact with a periphery of the frenum in the oral cavity, a second section in contact with a periphery of buccal mucosa, and a third section that is between the first section and the second section and in contact with a periphery of the vestibular of the oral cavity, and an indentation formed in a shape dented toward a central portion of the oral cavity may be provided in the first section and may be such that the frenum approaches to the indentation when the inner frame is inserted into the oral cavity.

7. The assistant tool for dental treatment according to claim 6, wherein there may be a predetermined height difference between a highest point of the first section and a lowest point of the second section.

8. The assistant tool for dental treatment according to claim 6, wherein the second section may be extended long in a lateral direction, and the third section may have a curved shape in which an absolute value of a slope is reduced from the first section to the second section.

9. An assistant tool for dental treatment is provided, including an inner frame inserted into an oral cavity, and a retraction member coupled to the inner frame to retract tissues around the oral cavity, in which the assistant tool may include a holder provided on at least one of the inner frame and the retraction member to fix a suction, and configured such that one side of the suction is positioned at a normal position on a predetermined portion in the oral cavity, the retraction member may include an outer frame configured so as to be mounted on an outside of the oral cavity, and a cover member in the form of a film having elasticity, with one side coupled to the inner frame and the other side coupled to the outer frame, in which the assistant tool for dental treatment may be configured such that, even when it is mounted, the assistant tool may allow the oral cavity of a patient to be open, and also allow an opening process of widening a gap between upper and lower teeth and a closing process of narrowing the gap between the upper and lower teeth to be performed.

10. The assistant tool for dental treatment according to claim 9, wherein the holder may be provided on the inner frame or the retraction member so as to be moved, allowing the suction to be positioned at a first position according to an anatomical shape in the oral cavity and a situation of the procedure, in which the first position may indicate a position at which a suction operation can be performed by the suction without disturbing the procedure.

11. The assistant tool for dental treatment according to claim 9, wherein the suction may include a suction tip and a suction tube, and a force required to separate the suction tube from the holder may be greater than a force required to fix the suction tube to the holder.

12. The assistant tool for dental treatment according to claim 9, wherein the holder may be provided in the inner frame, an outer holder may be provided in the outer frame, and the suction tube may be fixed to the holder and the outer holder.

13. The assistant tool for dental treatment according to claim 9, wherein the inner frame may include a first section in contact with a periphery of frenum in the oral cavity, a second section in contact with a periphery of buccal mucosa, and a third section that is between the first section and the second section and is in contact with a periphery of the vestibular of the oral cavity, and between a highest point of the first section and a lowest point of the second section, there may be a predetermined height difference such that a surface including a closed curve or an open curve forming the inner frame may be formed as a curved surface.

14. The assistant tool for dental treatment according to claim 9, wherein the second section may be extended long in a lateral direction, and inner frame may be configured in a peanut shape in which portions in contact with peripheries of frena in the oral cavity are dented into a concave shape.
